# EUROPÄISCHE PATENTANMELDUNG

(11) **EP 4 198 805 A1**
(43) Veröffentlichungstag der Anmeldung: **21.06.2023**
(21) Anmeldenummer: 21215702.8
(22) Anmeldetag: 17.12.2021
(51) Int. Cl.: G06F 30/30, G06F 117/08

(54) **COMPUTERIMPLEMENTIERTES VERFAHREN, DATENVERARBEITUNGSVORRICHTUNG UND COMPUTERPROGRAMMPRODUKT ZUM ERSTELLEN EINES HIERARCHISCHEN BLOCKDIAGRAMMS**

(71) Anmelder: dSPACE GmbH, 33102 Paderborn (DE)
(72) Erfinder: Lubeley, Dominik, 33102 Paderborn (DE); Kalte, Heiko, 33102 Paderborn (DE)

(57) **Zusammenfassung**

Beim Erstellen (2) eines hierarchischen Blockdiagramms (1) in einer grafischen Entwicklungsumgebung sollen die Ausführungszeiten von Modelloperation verkürzt werden, um somit eine performantere, reaktivere graphische Modellierung zu ermöglichen. Dies wird dadurch erreicht, dass ein computerimplementiertes Verfahren angegeben wird mit zumindest einem Subsystem-Block (S1), bei dem sich der Subsystem-Block (S1) auf einer ersten Hierarchieebene und weitere Subsystem-Blöcke (S1.1, S1.2, S1.3 ...), aus denen der Subsystem-Block (S1) besteht, auf untergeordneten Hierarchieebenen befinden, der Subsystem-Block (S1) parametrisierbar ist und zumindest über eine Callback-Funktion verfügt, wobei Callback-Funktionen Befehle definieren, die als Reaktion auf eine bestimmte Modellierungsaktivität ausgeführt werden, wobei zur Reduzierung von Hierarchieebenen (S1.1, S1.2, S1.3 ...) des Subsystem-Blocks (S1) zumindest eine hierarchische Blackbox (B1.1, B1.2, B1.3 ...) für den Subsystem-Block (S1) erstellt wird, wobei eine Reduzierung von der tiefsten Hierarchieebene an aufwärts erfolgt, wobei das Verfahren die folgenden Schritte umfasst: Automatisches Erstellen einer hierarchischen Blackbox (B1.1, B1.2, B1.3 ...) für einen Subsystem-Block (S1.1, S1.2, S1.3 ...), wobei die Blackbox (B1.1, B1.2, B1.3 ...) derart eingerichtet ist, beim Auswählen durch einen Anwender eine entsprechende Hierarchieebene aufzulösen, wobei die automatische Erstellung über eine Callback-Funktion erfolgt.

## Beschreibung

Die Erfindung betrifft ein computerimplementiertes Verfahren zum Erstellen eines hierarchischen Blockdiagramms in einer grafischen Entwicklungsumgebung. Auch betrifft die Erfindung eine Datenverarbeitungsvorrichtung sowie ein Computerprogrammprodukt.

Im Bereich der Hardware in the Loop (HIL) Simulation und bei Rapid Control Prototyping (RCP) Systemen für Echtzeitsimulationen haben sich grafische Modellierungsumgebungen etabliert. Die Simulation einer Echtzeitapplikation für eine bestimmte Taskperiode kann dabei in der Regel offline im Simulationsmodell mit virtuellen Stimuli und virtuellen Instrumenten oder online auf dem realen Simulator ausgeführt werden. Für die reale Simulation wird das grafische Modell für einen Prozessor zunächst z.B. in C-Code, für einen FPGA z.B. in VHDL Code übersetzt. Sowohl im Prozessor-Fall als auch im FPGA-Fall erfolgt die Modellierung auf Basis von Signalen und Blöcken/Subsystemen, die eine Operation auf einem oder mehreren Signalen ausführen und ein oder mehrere neue Signale erzeugen. Die Ausführungsreihenfolge ist signalflussgetrieben. Ein Block/Subsystem kann dabei beliebig viele untergeordnete Blöcke/Subsysteme beinhalten. Blöcke/Subsysteme können in eine Bibliothek verpackt und dadurch updatefähig gemacht und mehrfachinstanziiert werden. Die Verwendung/Instanziierung eines Bibliothekblocks führt nicht zu einer Verringerung der Blockanzahl im Modell, da z.B. für die Offlinesimulationsfähigkeit von der Modellierungsumgebung stets eine konsistente Kopie des Bibliothekblocks im Modell erzeugt wird.

Um eine variable Verwendung eines Blocks/Subsystems - egal ob losgelöst oder aus einer Bibliothek - zu ermöglichen, gibt es zwei wichtige Eigenschaften eines Blocks/Subsystems. Dabei ist auch das Modellroot, also die oberste Ebene des Blockdiagramms, als eigener Block/eigenes Subsystem zu betrachten. Die erste Eigenschaft ist, dass der Block/das Subsystem parametrisierbar ist. Hierbei besitzt ein Block/Subsystem seinen eigenen Variablen-Workspace. Variablen aus hierarchisch übergeordneten Workspaces stehen z.B. in Simulink im Workspace eines untergeordneten Blockes ebenfalls zur Verfügung, es sei denn, sie wurden durch einen identischen Variablenidentifier überschrieben. Diese Eigenschaft unterscheidet sie deutlich von z.B. verschachtelten C-Funktionen, in denen nur übergebene Variablen zur Verfügung stehen. Sie stellt einen Teil der mächtigen Möglichkeiten der grafischen Modellierung dar, verursachen aber auf der anderen Seite auch eine umfangreiche Daten- und Verwaltungsstruktur. Die zweite Eigenschaft ist, dass der Block/das Subsystem über Callbacks verfügt. Zu jeder Modellieraktion wie z.B. Initialisierung des Blocks/Subsystems, Kopie des Blocks/Subsystems, etc. kann eine Callback-Funktion definiert werden. So können z.B. in der Block Init-Funktion abhängig von den Block Parametern weitere verwendete Parameter berechnet werden. Daraus ergeben sich eine hohe Flexibilität und viele Eingriffspunkte, aber auch eine hohe Laufzeit zur Initialisierung eines Bocks/Subsystems. Zusammenfassend erkauft man sich diese Flexibilität mit erhöhten Ausführungszeiten von Modellierungsoperation (Modell öffnen, Blöcke verschieben, kopieren, einfügen), Initialisierungen und Build proportional zur Blockanzahl. Gleichzeitig eröffnet die grafische Modellierung Entwicklern die Möglichkeit zu modularisieren und beliebig zu skalieren. Während zu Beginn der grafischen Modellierung z.B. ein einfacher PID-Regler in einem Modell mit z.B. 10 Blöcken realisiert wurde, können heute komplette eDrive oder Leistungselektronik Lösungen aus 10 Blöcken zusammengeklickt werden. Unter diesen 10 Blöcken liegt dann jedoch jeweils eine tiefe Hierarchie aus 10.000en Blöcken, welche die oben beschriebenen erhöhten Ausführungszeiten proportional zur Blockanzahl zur Folge hat. Die grafische Modellierung gerät durch die zur Blockanzahl proportional ansteigende Trägheit und Zähigkeit des Modellierungstools somit an ihre Grenzen. Dieser Entwicklung haben aktuelle grafische Modellierungsumgebung wie z.B. Simulink von "The Mathworks" mit den Möglichkeiten von S-Funktionen (C-Code Black Boxen) und "Modell Referencing" (Auslagern von Modellanteilen in externe Modelle) nur bedingt Rechnung getragen. S-Funktionen können nicht einfach automatisiert aus Subsystemen erstellt werden, sondern müssen manuell erstellt und angepasst werden. "Modell-Referencing" ermöglicht zwar eine Verbesserung der oben aufgeführten Ausführungszeiten, hat jedoch starke Einschränkungen der Flexibilität. Es fehlt der nahtlose und automatische Übergang zur Abstraktion von Modellhierarchien zur flüssigeren Arbeit unter Beibehaltung der Flexibilität (Blockinitialisierung, Callbacks, usw.) der grafischen Modellierung.

Es ist daher die technische Aufgabe der vorliegenden Erfindung, ein computerimplementiertes Verfahren bereitzustellen bei dem die Ausführungszeiten von Modelloperation verkürzt werden um somit eine performantere, reaktivere graphische Modellierung zu ermöglichen.

Diese Aufgabe wird durch technische Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem Aspekt wird die erfindungsgemäße Aufgabe durch ein computerimplementiertes Verfahren zum Erstellen eines hierarchischen Blockdiagramms in einer grafischen Entwicklungsumgebung mit zumindest einem Subsystem-Block gelöst, bei dem sich der Subsystem-Block auf einer ersten Hierarchieebene und weitere Subsystem-Blöcke, aus denen der Subsystem-Block besteht, auf untergeordneten Hierarchieebenen befinden,
der Subsystem-Block parametrisierbar ist und zumindest über eine Callback-Funktion verfügt, wobei Callback-Funktionen Befehle definieren, die als Reaktion auf eine bestimmte Modellierungsaktivität ausgeführt werden,
wobei zur Reduzierung von Hierarchieebenen des Subsystem-Blocks zumindest eine hierarchische Blackbox für den Subsystem-Block erstellt wird, wobei eine Reduzierung von der tiefsten Hierarchieebene an aufwärts erfolgt, wobei das Verfahren die folgenden Schritte umfasst:
   - Automatisches Erstellen einer hierarchischen Blackbox für einen Subsystem-Block, wobei die Blackbox derart eingerichtet ist, beim Auswählen durch einen Anwender eine entsprechende Hierarchieebene aufzulösen, wobei die automatische Erstellung über eine Callback-Funktion erfolgt,
die Blackbox die folgenden technischen Merkmale umfasst:
   - zumindest eine Interface Beschreibung und/oder grafische Darstellung der Ein-/Ausgänge des Subsystem-Blocks in seiner Hierarchieebene, die der Subsystem-Block vorher auch besaß,
   - zumindest einen Verweis auf einen Modellinhalt des entsprechenden Subsystem-Blocks, mit weiteren Blackboxen für die Subsystem-Blöcke in den untergeordneten Hierarchieebenen,
   - Parameter, die der entsprechende Subsystem-Block vorher auch besaß,
   - Generierter Quell-Code des entsprechenden Subsystem-Blocks.

Bei dem generierten Quell-Code kann es sich um Code in einer Programmiersprache wie C oder HDL-Code in einer Hardwarebeschreibungssprache wie VHDL oder Verilog handeln.

In einer technisch vorteilhaften Ausführungsform des Verfahrens umfasst der Schritt des automatischen Erstellens einer hierarchischen Blackbox für einen Subsystem-Block die folgenden Schritte:
- Generieren eines Quell-Codes für den Subsystem-Block, wobei eventuell vorhandener Wrapper Code um den eigentlichen Funktionscode entfernt wird,
- Erzeugen eines System-Funktionsblocks auf Basis des generierten Quell-Codes ohne Wrapper Code, wobei der System-Funktionsblock den Zugriff auf System-Funktionen des Blockdiagramms ermöglicht, wobei System-Funktionen definieren, wie ein Block während verschiedener Teile einer Simulation arbeitet und der System-Funktionsblock die direkte Übergabe zusätzlicher Parameter an die System-Funktionen ermöglicht.

Wenn Code aus einem Subsystem-Block generiert wird, generieren die Codegeneratoren in der Regel Wrapper Code sowohl bei C-Code als auch bei HDL Code. Sie gehen dabei davon aus, dass man den Code eigenständig ausführen können möchte, als wäre es ein autarkes Modell. Im Wrapper Code werden dabei z.B. auch Tasks etc. angelegt. Für die Blackbox, die ja im Modell liegt und kein allein lauffähiges Modell sein soll, wird jedoch nur den Funktionscode gebraucht. Daher wird der Wrapper Code um den eigentlichen Funktionscode entfernt. Unter einem System-Funktionsblock wird insbesondere ein Funktionsblock verstanden, der den Zugriff auf System-Funktionen des Blockdiagramms ermöglicht. System-Funktionen definieren dabei, wie ein Block während verschiedener Teile einer Simulation arbeitet. Auch ermöglicht der System-Funktionsblock die direkte Übergabe zusätzlicher Parameter an die System-Funktionen. Beispielsweise können unter den System-Funktionen die unter der grafische Modellierungsumgebung Simulink von The Mathworks bereitgestellten S-Funktionen verstanden werden. Die Blackboxen können im Fall eines Prozessormodells somit aus S-Funktionen bestehen, daraus ergeben sich die Vorteile, dass für die S-Funktionen nur einmal Code generiert werden muss. Auch müssen sie nur einmal compiliert werden, sofern sie gegenüber dem letzten Compilevorgang unverändert geblieben sind. Die Generierungs- und Compilezeiten werden bei jedem weiteren Modell Build eingespart.

In einer vorteilhaften Erweiterung werden diese vorcompilierten S-Funktionen auch gar nicht statisch vor der Ausführung zu dem Modell gelinkt, sondern als dynamische Bibliotheken (.dll, bzw..so unter Linux) zu der Echtzeitapplikation gelegt. Sie werden somit erst zur Laufzeit dynamisch gelinkt. Damit besteht eine Echtzeit Applikation aus einer Menge von hierarchischen Objektcode-Dateien. Dadurch ergibt sich der Vorteil, dass lediglich das Subsystem und nicht das gesamte Modell neu compiliert werden muss, sollte sich etwas in einem bestimmten Subsystem ändern. Nicht reduzierte Modelle, mit 100.000en Blöcken benötigen viele Minuten bis Stunden für einen Build. Ändert sich nur ein kleines Subsystem, dauert der Build von dessen dynamischer Bibliothek (.dll / .so) nur wenige Sekunden.

In einer technisch vorteilhaften Ausführungsform des Verfahrens umfasst der Schritt des automatischen Erstellens einer hierarchischen Blackbox für einen Subsystem-Block ein Erstellen einer HDL-Code Blackbox mit folgenden Schritten:
- Ersetzen von virtuellen Signallinien durch Inports und Outports und verlegen dieser Ports aus tieferen Hierarchieebenen auf die oberste Subsystem Hierarchieebene und/oder
- Ersetzen von Inports und Outports der obersten Subsystem Hierarchieebene durch Interface Blöcke des verwendeten Code-Generators,
- Generieren von HDL-Code für den Subsystem-Block,
- Erzeugen einer hierarchischen Blackbox basierend auf dem HDL-Code.

Unter virtuellen Signallinien können beispielsweise in Simulink Goto/From Blöcke verstanden werden, die gerade die virtuellen Signallinien bilden. In einem Ausführungsbeispiel, bei dem ein Xilinx System verwendet wird, kann für die Erzeugung der hierarchischen Blackboxen generierter VHDL Code verwendet werden. Auch kann bei Xilinx Systemen die Verwendung spezieller Blöcke vorgesehen sein, die das Ausführung von HDL-Code auf dem Prozessor unterstützen.

In einer technisch vorteilhaften Ausführungsform des Verfahrens umfasst das Verfahren den zusätzlichen Schritt:
- Verschlüsseln des HDL-Codes.

In einer technisch vorteilhaften Ausführungsform des Verfahrens umfasst das Verfahren die folgenden zusätzlichen Schritte:
- Hinterlegen einer zusätzlich bereits synthetisierten Netzliste, wobei die Netzliste aus dem generierten HDL-Code synthetisiert wird, wobei die Synthese die folgenden Schritte umfasst:
- Erzeugen einer synthetisierten Netzliste,
- Speichern der synthetisierten Netzliste,
- Einbinden der synthetisierten Netzliste in die Blackbox, wobei für eine Offline-Simulation weiterhin der HDL-Code verwendet wird und für die Codegenerierung die fertig synthetisierte Netzliste verwendet wird.

Vorteilhaft hierbei ist, dass bei einem FPGA Build die Blackbox durch die zusätzlich hinterlegten und bereits synthetisierten Netzlisten beschleunigt wird.

In einer technisch vorteilhaften Ausführungsform des Verfahrens umfasst das Verfahren ein Verschlüsseln der Netzliste.

In einer technisch vorteilhaften Ausführungsform des Verfahrens enthält die Blackbox einen Verweis auf eine Implementierung.

In einer technisch vorteilhaften Ausführungsform des Verfahrens umfasst die Blackbox ein Original-Modell, oder die Blackbox umfasst eine erstellte und referenzierte Kopie des Original-Modells und das Verfahren umfasst die folgenden zusätzlichen Schritte:
- Öffnen eines Subsystems mittels einer Öffnen-Callback-Funktion,
- Wiederherstellen und Anzeigen des editierbare Original-Modells der obersten Blackbox-Hierarchieebene.

In einer technisch vorteilhaften Ausführungsform des Verfahrens enthält die Blackbox ein Offline-Simulationsmodell.

In einer technisch vorteilhaften Ausführungsform des Verfahrens umfasst die Blackbox als Parameter eine Änderungshäufigkeit und/oder die Anzahl von vorgenommenen Änderungen.

In einer technisch vorteilhaften Ausführungsform des Verfahrens umfasst das Verfahren die folgenden zusätzlichen Schritte:
- Regenerieren der hierarchischen Blackbox bei Vorliegen zumindest einer der folgenden Bedingungen:
   - Wenn im Modell bei einer Öffnen-Callback-Funktion oder Schließen-Callback-Funktion erkannt wird, dass einzelne Subsysteme noch nicht reduziert wurden,
   - Wenn beim Schließen eines Subsystems mittels einer Schließen-Callback-Funktion feststeht, dass das Subsystem modifiziert wurde,
   - Bei einem Update von Bibliotheksblöcken, die in den Blackboxen verwendet wurden,
   - Bei einer Änderung von Input-Datentypen und/oder Input-Breiten.

In einer technisch vorteilhaften Ausführungsform des Verfahrens werden in den Callback-Funktionen globale Bedingungen berücksichtigt, um die Häufigkeit von Regenerierungen zu reduzieren, wobei eine Regenerierung erst dann erfolgt, wenn zumindest einer der folgenden globalen Bedingungen erfüllt ist:
- Die letzte Regenerierung der Blackbox größer einer bestimmten Anzahl von Minuten her ist,
- Die Letzte Änderung größer einer bestimmten Anzahl von Minuten her ist,
- Die Änderungshäufigkeit kleiner einem bestimmten Wert ist,
- Die Anzahl der Änderungen einen bestimmten Wert übersteigt.

Gemäß einem weiteren Aspekt wird die erfindungsgemäße Aufgabe durch eine Datenverarbeitungsvorrichtung gelöst, die Mittel zur Ausführung des zuvor beschriebenen Verfahrens umfasst.

Gemäß einem weiteren Aspekt wird die erfindungsgemäße Aufgabe durch ein Computerprogrammprodukt gelöst, umfassend Befehle, die bei der Ausführung des Verfahrens durch einen Computer bewirken, dass der Computer das zuvor beschriebene Verfahren ausführt.

Ausführungsbeispiele der Erfindung sind in den Zeichnungen dargestellt und werden im Folgenden näher beschrieben.

Es zeigen:
- Fig. 1: ein Blockdiagramm eines exemplarischen Subsystems als Modell auf der linken Seite und als Blackbox auf der rechten Seite gemäß einem Ausführungsbeispiel der Erfindung,
- Fig. 2: ein Blockdiagramme eines exemplarischen Subsystems, wobei in Fig. 2 a) das Originalmodell gezeigt ist, in Fig. 2 b) ein mittels Blackboxen reduziertes Modell gezeigt ist und in Fig. 2 c) ein hierarchisch reduziertes Modell gezeigt ist, gemäß einem Ausführungsbeispiel der Erfindung.

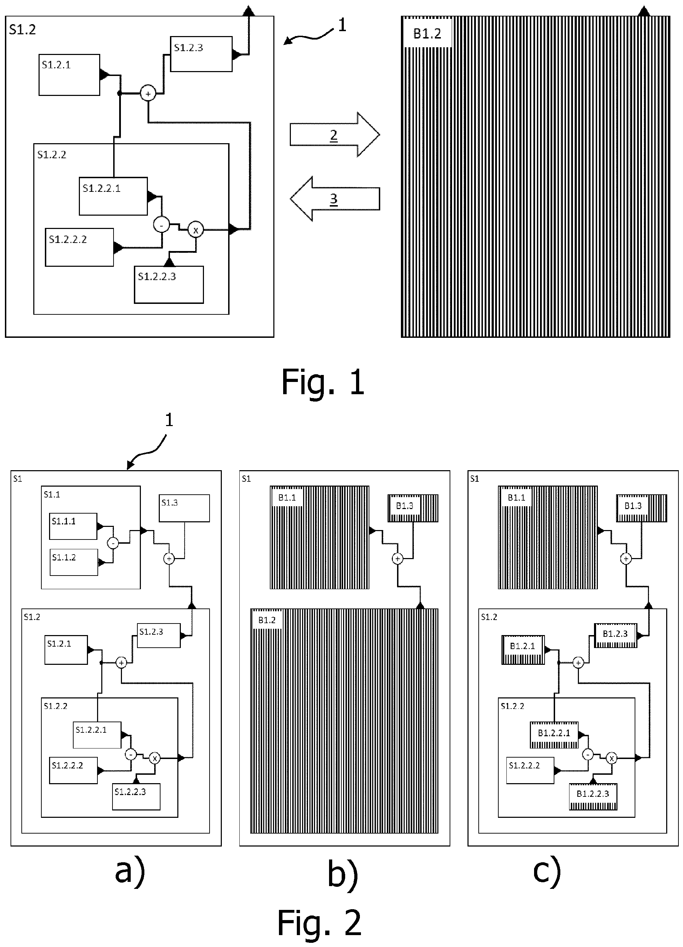

Fig. 1 zeigt ein Blockdiagramm 1 eines exemplarischen Subsystem-Blocks S1.2 als Modell auf der linken Seite und als Blackbox B1.2 auf der rechten Seite. In Fig. 1 wird gezeigt, wie ein originaler Subsystem-Block S1.2 durch eine Blackbox B 1.2 ersetzt wird, indem eine hierarchischen Blackbox B1.2 für den Subsystem-Block S1.2 erstellt wird 2. Dies kann beispielsweise dann geschehen, wenn ein Anwender den Subsystem-Block S1.2 verlässt. Die Blackbox B1.2 wird beispielsweise wieder aufgelöst 3, wenn der Anwender den entsprechenden Subsystem-Block S1.2 auswählt. Das Modell S1.2 auf der linken Seite besteht aus weiteren Subsystem-Blöcken S1.2.1, S 1.2.2, S 1.2.3. Das Erstellen 2 der hierarchischen Blackbox B1.2 für den Subsystem-Block S1.2 erfolgt dabei mittels einer Callback-Funktion. Wobei über eine Callback-Funktion Befehle definiert werden, die als Reaktion auf eine bestimmte Modellierungsaktivität ausgeführt werden.

Die Umsetzung des Verfahrens zum Erstellen einer Blackbox erfolgt in mehreren Schritten. Dabei erfolgt das Erstellen im Fall von Prozessor Modellen und im Fall von FPGA Modellen leicht unterschiedlich.

Im Prozessor Modell Fall wird zunächst Quell-Code für den Subsystem-Block S1.2 generiert. Dies kann beispielsweise über eine C-Code S-Funktion erfolgen. Je nach Code Generierung wird nicht benötigter Wrapper Code (z.B. für das Task Handling) um den eigentlichen Funktionscode entfernt. Abschließend wird ein Block auf Basis des generierten Codes ohne Wrapper Anteile erzeugt. Dies kann beispielsweise in einer Matlab Simulink Umgebung ein S-Funktion-Block sein.

Die Blackboxen B1.2 bestehen im Fall vom FPGA Modellen beispielsweise aus HDL-Blackboxen. Hieraus ergeben sich die Vorteile, dass für die HDL-Blackboxen nur einmal HDL-Code generiert und eine Netzliste erzeugt werden muss. Die Generierungs- und Synthesezeiten werden bei jedem weiteren Modell Build eingespart, sofern der entsprechende Subsystem-Block unverändert bleibt.

In einem Ausführungsbeispiel werden dabei zunächst virtuelle Signallinien z.B. Goto/From in Simulink durch In- und Outports ersetzt und dieser Ports aus tieferen Hierarchieebenen auf die oberste Block/Subsystem Hierarchieebene verlegt. Auch kann es vorgesehen sein, dass In- und Outports der obersten Subsystem-Block S1.2 Hierarchien ersetzt werden. Für z.B. den Xilinx Fall kann dies durch den Xilinx System Generator Gateway In und Out Ports erfolgen. Für z.B. den HDL Coder von The MathWorks kann dieser Schritt entfallen. Auch kann es vorgesehen sein, dass ein Code-Generierungsblocks ergänzt wird. Im Xilinx Falle ist dies beispielsweise der Xilinx System Generator Block. Für z.B. den HDL Coder von The MathWorks kann dieser Schritt ebenfalls entfallen. Anschließend wird HDL-Code für den Subsystem-Block generiert. Danach wird eine Blackbox basierend auf den HDL Sourcen erzeigt. Im z.B. Xilinx Fall kann dazu der generierte VHDL Code verwendet werden. Dabei werden die VHDL Sourcen immer zur Offlinesimulation verwendet. Die VHDL Sourcen können auch in jeder Synthese des Gesamtmodells neu synthetisiert werden. Zusätzlich kann eine Verschlüsselung des VHDL Codes vorgesehen sein.

Zur Beschleunigung der Blackbox B1.2 beim FPGA Build können zusätzlich hinterlegte bereits synthetisierte Netzliste vorgesehen sein. Die Netzlisten werden aus den generierten HDL Sourcen generiert und in die Blackbox B1.2 eingebunden. Dabei wird für die Offline-Simulation weiterhin der HDL Code verwendet. Für die Codegenerierung wird die fertig synthetisierte Netzliste verwendet.

Anschließend werden die Blackboxen B1.2 für die Interaktion mit dem Modellierer vorbereitet. Zur Vorbereitung der interaktiven Modellierung werden die Blackboxen B1.2 entsprechend modifiziert. Dies kann insbesondere das Einfügen einer Öffnen-Callback-Funktion sein, die die Blackbox B1.2 öffnet, indem die Blackbox B1.2 durch ihr Original Subsystem-Block S1.2 ersetzt und diese geöffnet wird. Dem Original Subsystem-Block S1.2 wird in diesem Fall eine Schließen-Callback-Funktion hinzugefügt, die bewirkt, dass der Subsystem-Block S1.2 beim Schließen wieder durch die Blackbox B1.2 ersetzt wird.

Wie zuvor erläutert wurde dazu der Modell Öffnen/Schließen Callback, sowie für jedes Subsystem S1.2 der Öffnen/Schließen Callback verwendet (in Simulink alternativ auch der "ParentClose" Callback). Um die Callback-Funktion im Modell einzufügen, sind mehrere Mechanismen denkbar. Beispielsweise kann ein expliziter Aufruf z.B. per Dialog, Knopf, oder einen Kommandozeilen-/API Aufruf erfolgen. Auch kann das Einfügen eines Modellreduktions-Blocks in das Modell vorgesehen sein, der bei seiner Initialisierung beim Modell Init fehlende Callback-Funktionen setzt.

Die in Fig. 1 schematisch gezeigte Blackbox B1.2 beinhaltet in einem Ausführungsbeispiel der Erfindung zumindest eine Interface Beschreibung/grafische Darstellung der Ein-/Ausgänge des Blocks in seiner Hierarchieebene, die der Subsystem-Block S1.2 vorher auch besaß, einen Verweis auf den Modellinhalt des entsprechenden Subsystem-Blocks S1.2, mit weiteren Blackboxen für die tieferen Subsystem-Blöcke, Parameter, die der Subsystem-Block S1.2 vorher auch besaß, und den generierten HDL- oder C-Code des Subsystem-Blocks. In einem weiteren Ausführungsbeispiel kann die Blackbox einen Verweis auf die Implementierung/Compilat und ein Offlinesimulationsmodell beinhalten. Des Weiteren kann die Blackbox B 1.2 Parameter beinhalten, die von Regenerierungsbedingungen der Callbacks ausgewertet werden. Diese Parameter werden auch am Subsystem-Block S1.2 hinterlegt, wenn eine Blackbox aufgrund einer Bedingung noch nicht regeneriert wurde, sondern zunächst wieder als original Subsystem-Block S1.2 im Modell belassen wird. Diese Parameter können z.B. eine letzte Änderung oder eine letzte Regenerierung sein. In einem Ausführungsbeispiel können als Parameter eine Änderungshäufigkeit und die Anzahl der Änderungen vorgesehen sein.

Es gibt verschiedene Bedingungen unter denen die hierarchischen Blackboxen neu generiert werden. Diese Bedingungen können z.B. sein, wenn im Modell eine Öffnen/Schließen-Callback-Funktionen erkannt wird und das Modell oder die einzelnen Subsystem-Blöcke S1.2 noch nicht reduziert wurden. Eine weitere Bedingung kann eine Schließen Callback-Funktion eines Subsystem-Blocks S1.2 sein, wenn dieser Subsystem-Block S1.2 modifiziert wurde. Auch kann eine Bedingung für ein Regenerieren sein, wenn Bibliotheksblöcke geupdated wurden, die in den Blackboxen B1.2 verwendet wurden. Wenn eine neue Version einer in den Subsystem-Blöcken S1.2 verwendeten Block-Bibliothek verwendet wird, müssen alle Blackboxen in denen Blöcke dieser Bibliothek verwendet wurden neu generiert werden. Für welche Blackboxen das zutrifft lässt sich anhand der Kopie des Modells mit den originalen Subsystemen feststellen. Das Update der Blöcke ist in der Kopie des Modells mit den originalen Subsystemen z.B. bei Simulink bereits beim Modell öffnen erfolgt.

Bei Änderung von Input-Datentypen/Breiten werden die Blackboxen B1.2 neu generiert. Da im Prozessormodell in der Regel mit Floating Point modelliert wird, tritt dieser Fall eher bei der FPGA Modellierung auf. In einem Ausführungsbeispiel ist eine optionale Erweiterung für FPGAs, dass die Interfacebreiten in der Blackbox B1.2 und ihrem VHDL Code mittels einer generischen Variablen definiert werden. Dadurch wird der häufigste Fall, dass sich eine Fixed Point Datenbreite ändert, abgefangen. Eine Datentypänderung ist damit nicht abfangbar, sie ist jedoch auch eher unwahrscheinlich: entweder ein Modell wird in Fixed Point oder Floating Point modelliert. Im Fall von Floating Point ist die Datenbreite auch im FPGA stets unverändert. Mit dem Trend zu Floating Point im FPGA Bereich, wird die Änderung von Input-Datentypen/Breiten zukünftig auch hier selten.

Um Blackboxen nicht zu oft neu zu generieren, was im Hintergrund Rechenleistung erfordert, können für die Callback-Funktionen globale Bedingungen angegeben werden, die die Häufigkeit reduzieren. Diese Bedingungen können z.B. sein: Die letzte Regenerierung der Blackbox B1.2 größer einer bestimmten Anzahl von Minuten her ist, die Letzte Änderung größer einer bestimmten Anzahl von Minuten her ist, die Änderungshäufigkeit kleiner einem bestimmten Wert ist oder die Anzahl der Änderungen einen bestimmten Wert übersteigt. Diese Bedingungen können dazu führen, dass trotz Änderung im Subsystem-Block S1.2 keine Regenerierung der Blackbox B1.2 erfolgt. Beispielsweise wenn der Anwender den Subsystem-Block S1.2 nur kurz verlässt und danach den Subsystem-Block S1.2 wieder ändert.

In einem Ausführungsbeispiel kann eine Schaltfläche eingefügt werden, die die Regenerierung einer Blackbox B1.2 und aller Blackboxen innerhalb dieser Blackbox startet.

In Fig. 2 sind beispielhaft unterschiedliche Stufen der Modellreduktion zu sehen. In Fig. 2 a) ist das Originalmodell aus hierarchischen Subsystem-Blöcken S1.1, S1.2, S1.3 ... (visualisiert bis Tiefe 4) gezeigt. In Fig. 2b) ist das Modell komplett auf Blackboxen/abstrakten Blöcken B1.1, B1.2, B1.3 ... der Tiefe 2 reduziert. Dies kann beispielweise der Fall sein, wenn ein Nutzer keine weiteren Änderungen an diesen Blöcken plant, sondern diese z.B. nur verschalten möchte. In Fog. 2 c) sieht man einen abstrahierten Block S1 teilweise wieder in mehreren Hierarchieebenen in seine Bestandteile aufgelöst. Das Verfahren reduziert seine Subsystem-Blöcke S1.1, S1.2, S1.3 ... automatisch von der tiefsten Ebene an aufwärts mittels der hierarchischen Blackboxen B1.1, B1.2, B1.3 .... Sobald ein Anwender eine Blackbox B1.1, B1.2, B1.3 ... bearbeiten möchte, wird nur die entsprechende Blackbox Hierarchieebene aufgelöst. In Fig. 2 c) wollte der Anwender beispielweise den Subsystem-Block 1.2.2.2 bearbeiten. Betrachtet man unter den zuvor genannten Gesichtspunkten die Fig. 2 b), weiß man nun, dass die drei verbliebenen Blackboxen B1.1, B1.2, B1.3 unter der Haube aus hierarchisch verschachtelten Blackboxen B 1.2.1, B1.2.3, B1.2.2.1, B1.2.2.3 generiert wurden. Sobald der Anwender bei der grafischen Bearbeitung eine der Blackboxen B1.1, B1.2, B1.3 ... öffnet, wird eine Blackbox Hierarchieebene aufgelöst. D.h. der Anwender ist von Fig. 2 b) zu Fig. 2 c) gelangt, indem er zunächst Blackbox 1.2, dann Blackbox 1.2.2 und dann Blackbox 1.2.2.2 geöffnet hat, um Subsystem 1.2.2.2 zu bearbeiten. Dadurch bleibt die Anzahl der aufgelösten Blackboxen B1.1, B1.2, B1.3 ... minimal, ein flüssiges Arbeiten ist jederzeit möglich, bei einer Neu-Erstellung der Blackbox 1.2 muss nur das editierte Subsystem 1.2.2.2 neu synthetisiert/compiliert werden, da alle Blackboxen hierarchisch bis zur obersten Blackbox Ebene 1.2 immer nur inkludiert/gelinked werden.

Alle in Verbindung mit einzelnen Ausführungsformen der Erfindung erläuterten Merkmale können in unterschiedlicher Kombination in dem erfindungsgemäßen Gegenstand vorgesehen sein, um gleichzeitig deren vorteilhafte Wirkungen zu realisieren, auch wenn diese zu unterschiedlichen Ausführungsformen beschrieben worden sind.

Der Schutzbereich der vorliegenden Erfindung ist durch die Patentansprüche gegeben und wird durch die in der Beschreibung erläuterten oder den Figuren gezeigten Merkmalen nicht beschränkt.

**Bezugszeichenliste**

| | |
|---|---|
| Blockdiagramm | 1 |
| Erstellen der Blackbox | 2 |
| Auflösen der Blackbox | 3 |
| Subsystem 1 Modellroot | S1 |
| Subsystem 1.1 | S1.1 |
| Subsystem 1.1.1 | S1.1.1 |
| Subsystem 1.1.2 | S1.1.2 |
| Subsystem 1.3 | S1.3 |
| Subsystem 1.2 | S1.2 |
| Subsystem 1.2.1 | S1.2.1 |
| Subsystem 1.2.2 | S1.2.2 |
| Subsystem 1.2.3 | S1.2.3 |
| Subsystem 1.2.2.1 | S1.2.2.1 |
| Subsystem 1.2.2.2 | S1.2.2.2 |
| Subsystem 1.2.2.3 | S1.2.2.3 |
| Blackbox 1.1 | B1.1 |
| Blackbox 1.2 | B1.2 |
| Blackbox 1.3 | B1.3 |
| Blackbox 1.2.1 | B1.2.1 |
| Blackbox 1.2.3 | B 1.2.3 |
| Blackbox 1.2.2.1 | B 1.2.2.1 |
| Blackbox 1.2.2.3 | B1.2.2.3 |

## Patentansprüche

1. Computerimplementiertes Verfahren zum Erstellen (2) eines hierarchischen Blockdiagramms (1) in einer grafischen Entwicklungsumgebung mit zumindest einem Subsystem-Block (S1), bei dem sich der Subsystem-Block (S1) auf einer ersten Hierarchieebene und weitere Subsystem-Blöcke (S1.1, S1.2, S1.3 ...), aus denen der Subsystem-Block (S1) besteht, auf untergeordneten Hierarchieebenen befinden,
der Subsystem-Block (S1) parametrisierbar ist und zumindest über eine Callback-Funktion verfügt, wobei Callback-Funktionen Befehle definieren, die als Reaktion auf eine bestimmte Modellierungsaktivität ausgeführt werden,
wobei zur Reduzierung von Hierarchieebenen (S1.1, S1.2, S1.3 ...) des Subsystem-Blocks (S1) zumindest eine hierarchische Blackbox (B1.1, B1.2, B1.3 ...) für den Subsystem-Block (S1) erstellt wird, wobei eine Reduzierung von der tiefsten Hierarchieebene an aufwärts erfolgt, wobei das Verfahren die folgenden Schritte umfasst:
- Automatisches Erstellen einer hierarchischen Blackbox (B1.1, B1.2, B1.3 ...) für einen Subsystem-Block (S1.1, S1.2, S1.3 ...), wobei die Blackbox (B1.1, B1.2, B1.3 ...) derart eingerichtet ist, beim Auswählen durch einen Anwender eine entsprechende Hierarchieebene aufzulösen, wobei die automatische Erstellung über eine Callback-Funktion erfolgt,
die Blackbox (B1.1, B1.2, B1.3 ...) die folgenden technischen Merkmale umfasst:
- zumindest eine Interface Beschreibung und/oder grafische Darstellung der Ein-/Ausgänge des Subsystem-Blocks (S1.1, S1.2, S1.3 ...) in seiner Hierarchieebene, die der Subsystem-Block (S1.1, S1.2, S1.3 ...) vorher auch besaß,
- zumindest einen Verweis auf einen Modellinhalt des entsprechenden Subsystem-Blocks (S1.1, S1.2, S1.3 ...), mit weiteren Blackboxen (B1.1, B1.2, B1.3 ...) für die Subsystem-Blöcke (S1.1, S1.2, S1.3 ...) in den untergeordneten Hierarchieebenen,
- Parameter, die der entsprechende Subsystem-Block (S1.1, S1.2, S1.3 ...) vorher auch besaß,
- Generierter Quell-Code des entsprechenden Subsystem-Blocks (S1.1, S1.2, S1.3 ...).

2. Computerimplementiertes Verfahren nach Anspruch 1, **dadurch gekennzeichnet, dass** der Schritt des automatischen Erstellens einer hierarchischen Blackbox (B1.1, B1.2, B1.3 ...) für einen Subsystem-Block (S1.1, S1.2, S1.3 ...) die folgenden Schritte umfasst:
- Generieren eines Quell-Codes für den Subsystem-Block (S1.1, S1.2, S1.3 ...), wobei eventuell vorhandener Wrapper Code um den eigentlichen Funktionscode entfernt wird,
- Erzeugen eines System-Funktionsblocks auf Basis des generierten Quell-Codes ohne Wrapper Code, wobei der System-Funktionsblock den Zugriff auf System-Funktionen des Blockdiagramms ermöglicht, wobei System-Funktionen definieren, wie ein Block während verschiedener Teile einer Simulation arbeitet und der System-Funktionsblock die direkte Übergabe zusätzlicher Parameter an die System-Funktionen ermöglicht.

3. Computerimplementiertes Verfahren nach Anspruch 1, **dadurch gekennzeichnet, dass** der Quell-Code ein HDL-Code ist und der Schritt des automatischen Erstellens einer hierarchischen Blackbox (B1.1, B1.2, B1.3 ...) für einen Subsystem-Block (S1.1, S1.2, S1.3 ...) ein Erstellen einer HDL-Code Blackbox (B1.1, B1.2, B1.3 ...) umfasst mit folgenden Schritten:
- Ersetzen von virtuellen Signallinien durch Inports und Outports und verlegen dieser Ports aus tieferen Hierarchieebenen auf die oberste Subsystem Hierarchieebene und/oder
- Ersetzen von Inports und Outports der obersten Subsystem Hierarchieebenen durch Interface Blöcke des verwendeten Code-Generators,
- Generieren von HDL-Code für den Subsystem-Block (S 1.1, S1.2, S1.3 ...),
- Erzeugen einer hierarchischen Blackbox (B1.1, B1.2, B1.3 ...) basierend auf dem HDL-Code.

4. Computerimplementiertes Verfahren nach Anspruch 3 **dadurch gekennzeichnet, dass** das Verfahren den zusätzlichen Schritt umfasst:
- Verschlüsseln des HDL-Codes.

5. Computerimplementiertes Verfahren nach Anspruch einem der Ansprüche 3 bis 4 **dadurch gekennzeichnet, dass** das Verfahren die folgenden zusätzlichen Schritte umfasst:
- Hinterlegen einer zusätzlich bereits synthetisierten Netzliste, wobei die Netzliste aus dem generierten HDL-Code synthetisiert wird, wobei die Synthese die folgenden Schritte umfasst:
- Erzeugen einer synthetisierten Netzliste,
- Speichern der synthetisierten Netzliste,
- Einbinden der synthetisierten Netzliste in die Blackbox, wobei für eine Offline-Simulation weiterhin der HDL-Code verwendet wird und für die Codegenerierung die fertig synthetisierte Netzliste verwendet wird.

6. Computerimplementiertes Verfahren nach Anspruch 5, **dadurch gekennzeichnet, dass** das Verfahren ein Verschlüsseln der Netzliste umfasst.

7. Computerimplementiertes Verfahren nach einem der vorherigen Ansprüche, **dadurch gekennzeichnet, dass** die Blackbox (B1.1, B 1.2, B1.3 ...) einen Verweis auf eine Implementierung enthält.

8. Computerimplementiertes Verfahren nach einem der vorherigen Ansprüche, **dadurch gekennzeichnet, dass** die Blackbox (B1.1, B1.2, B1.3 ...) ein Original-Modell umfasst, oder die Blackbox (B1.1, B1.2, B1.3 ...) eine erstellte und referenzierte Kopie des Original-Modells umfasst und das Verfahren die folgenden zusätzlichen Schritte umfasst:
- Öffnen eines Subsystem-Blocks (S1.1, S1.2, S1.3 ...) mittels einer Öffnen-Callback-Funktion,
- Wiederherstellen und Anzeigen des editierbare Original-Modells der obersten Blackbox-Hierarchieebene.

9. Computerimplementiertes Verfahren nach einem der vorherigen Ansprüche, **dadurch gekennzeichnet, dass** die Blackbox (B1.1, B1.2, B1.3 ...) ein Offline-Simulationsmodell enthält.

10. Computerimplementiertes Verfahren nach einem der vorherigen Ansprüche, **dadurch gekennzeichnet, dass** die Blackbox (B1.1, B1.2, B1.3 ...) als Parameter eine Änderungshäufigkeit und/oder die Anzahl von vorgenommenen Änderungen umfasst.

11. Computerimplementiertes Verfahren nach einem der vorherigen Ansprüche, **dadurch gekennzeichnet, dass** das Verfahren die folgenden zusätzlichen Schritte umfasst:
- Regenerieren der hierarchischen Blackbox (B1.1, B1.2, B1.3 ...) bei Vorliegen zumindest einer der folgenden Bedingungen:
- Wenn im Modell bei einer Öffnen-Callback-Funktion oder Schließen-Callback-Funktion erkannt wird, dass einzelne Subsystem-Blöcke (S1.1, S1.2, S1.3 ...) noch nicht reduziert wurden,
- Wenn beim Schließen eines Subsystem-Blocks (S1.1, S1.2, S1.3 ...) mittels einer Schließen-Callback-Funktion feststeht, dass der Subsystem-Block (S1.1, S1.2, S1.3 ...) modifiziert wurde,
- Bei einem Update von Bibliotheksblöcken, die in den Blackboxen (B1.1, B1.2, B1.3 ...) verwendet wurden,
- Bei einer Änderung von Input-Datentypen und/oder Input-Breiten.

12. Computerimplementiertes Verfahren nach einem der vorherigen Ansprüche, **dadurch gekennzeichnet, dass** in den Callback-Funktionen globale Bedingungen berücksichtigt werden, um die Häufigkeit von Regenerierungen zu reduzieren, wobei eine Regenerierung erst dann erfolgt, wenn zumindest eine der folgenden globalen Bedingungen erfüllt ist:
- Die letzte Regenerierung der Blackbox (B1.1, B1.2, B1.3 ...) größer einer bestimmten Anzahl von Minuten her ist,
- Die Letzte Änderung größer einer bestimmten Anzahl von Minuten her ist,
- Die Änderungshäufigkeit kleiner einem bestimmten Wert ist,
- Die Anzahl der Änderungen einen bestimmten Wert übersteigt.

13. Datenverarbeitungsvorrichtung, die Mittel zur Ausführung des Verfahrens nach einem der vorherigen Ansprüche umfasst.

14. Computerprogrammprodukt, umfassend Befehle, die bei der Ausführung des Programms durch einen Computer diesen veranlassen, das Verfahren nach einem der Ansprüche 1 bis 12 auszuführen.
